# EUROPEAN PATENT SPECIFICATION

(11) **EP 2 131 601 B1**
(45) Date of publication and mention of the grant of the patent: **26.02.2014**
(21) Application number: 07720395.8
(22) Date of filing: 13.03.2007
(51) Int. Cl.: H04W 4/10, H04W 36/08

(54) **A CELL RESOURCE RELEASE JUDGING METHOD OF THE CELLULAR TRUNKING MOBILE COMMUNICATION SYSTEM**
ZELLENBETRIEBSMITTELFREIGABEBEURTEILUNGSVERFAHREN EINES ZELLULAREN BÜNDELMOBILKOMMUNIKATIONSSYSTEMS
PROCÉDÉ DE DÉTERMINATION D'UNE LIBÉRATION DE RESSOURCES CELLULAIRES D'UN SYSTÈME DE COMMUNICATION MOBILE DE JONCTION CELLULAIRE

(43) Date of publication of application: 09.12.2009
(73) Proprietor: ZTE Corporation, Guangdong Province 518057 (CN)
(72) Inventor: LIU, Xuemin, Shenzhen Guangdong 518057 (CN); CHEN, Yanye, Shenzhen Guangdong 518057 (CN); YU, Yuanfang, Shenzhen Guangdong 518057 (CN)
(74) Representative: Gray, John James
(86) International application number: PCT/CN2007/000808
(87) International publication number: WO 2008/110033

(56) References cited:
- WO-A1-96/20573
- WO-A2-01/86975
- CN-A- 1 592 436
- CN-A- 1 816 209
- CN-A- 1 867 172
- US-A1- 2004 142 694
- US-A1- 2005 054 375
- US-B2- 6 882 855

## Description

### Technical Field

The present invention relates to a method for judging cell resource release in the cellular trunking mobile communication system when implementing terminal handoff under the circumstance of applying channel sharing.

### Background of the Invention

The trunking communication system is a special mobile communication system in which multiple users share a group of wireless channels and dynamically use these channels. It is a commanding and scheduling system, and in some countries where social economy, industry and agriculture are well developed, the system is widely applied in sectors of enterprises, institutions, industrials and mining, oilfields, farms, public security, police and armies which have relatively high requirements for commanding and scheduling function. The cellular trunking communication system combines the cellular communication system with the special scheduling communication system, thus not only extend the business scope of the cellular communication system, but also let the trunking communication system get rid of the limitations of the special scheduling communication system in function and region. The present cellular trunking communication systems can be divided into the modes of TDMA (Time Division Multiplex Access) and CDMA (Code Division Multiplex Access) according to the access method. Nowadays, with the ripeness of the third generation communication technology, the TDMA mode can not meet the increasing requirements in communication because it can not smoothly evolve into the third generation communication system, and has limited capacity and low data throughput. However, the CDMA system can meet the requirements of the third generation wireless communication system since it has broadband spread-spectrum air interface, and it can provide not only the traditional voice service but also high-speed packet data service. Combining the CDMA cellular communication system with the digital trunking system can not only increase the number of users in the trunking system in a single sector, but also can develop more new services having the properties of the trunking system on the basis of the high-speed packet data service.

In group calls, the group-users may be distributed in different cells, but some of the cells may have no users, or some cells with users become no-user cells after a period of time because users actively withdraw the call, or move and hand off to other cells during the call. It is meaningless to keep the channel links for those no-user cells, which may waste the resources and decrease the system capacity.

For a common call, since there is an independent link between the terminal and the base station, the base station can acquire in real time the information such as the terminal releasing the link, dropping off the call, or performing hand off, and so on, thus the base station releases the unused cell channel resource to avoid wasting resources. While for the trunking system, since all the terminals in the group share the air channel and there is no independent link between a single terminal and the base station, the base station can not obtain the real time information about the cell of the terminal in the call, thus it can not know in real time the user condition in a specific cell. So, when there is no group-user accessing to the call in a cell, a checking mechanism (that is, a cellular resource release judging method) is desired to guarantee the release of the channel resource to avoid resource waste, to increase the system capacity, and to better meet the group-users' requirements. Meanwhile, when implementing the group call in the CDMA mode, since the CDMA system supports soft handoff, the channel resource used for soft handoff should be reserved to guarantee the call quality of the terminals at the boundary of the cells.

The conventional method for judging cell resource release is as follows:
1) For each group, the system sends checking information to all the cells with which the system have established channel resource to require the terminals to report their state information;
2) After receiving the checking information, the terminals in a cell which are in the group call report their state information;
3) The system judges whether there exists users according to whether there exists reverse signaling (including the state information) of the terminals in the cell, and releases the channel resource of the cell if there is no reverse signaling related to the cell in a checking period.

In some CDMA trunking system implemented at present, the terminals obtain the information of adjacent cells from the forward signaling channel of the cell, and handoff is directly performed if the target cell has channel resource without the need of signaling interaction with the system. If the target cell does not establish channel resource or has released the channel resource, there is a need for the terminal to send handoff request message, and the system establishes channel resource in the target cell according to the request message and notifies the source cell, then the terminal obtains the channel resource of the target cell from the forward signaling channel of the source cell, and implements handoff.

However, when there is a cell resource releasing in the system, and meanwhile, there is a terminal handing off from another cell to the cell releasing the resource (the terminal does not acquire in time the information that the target cell resource is released), handoff may fail since there is signaling time difference between the system and the terminal. For example, terminal a is in cell A, and a signal received from cell A indicates that cell B has channel resource, and the strength of the pilot signal in cell B meets the handoff requirement, then perform a handoff. Meanwhile, at the system side, cell B finds out that there is no user in the cell after checking for a period, releases the cell channel resource, and notifies cell A. When cell B has released the channel resource and before cell A updates the signaling to notify terminal a, terminal a hands off to cell B, then the handoff may fail since the resource of cell B has actually been released when terminal a performs the handoff to cell B. Moreover, as the channel sharing, terminals of multiple users needs to preempt the shared reverse signaling channel based on time division, therefore, the terminals are generally needed to report the state information at different time, that is, each of them calculates a time point of reporting in a checking period (set by the system and notified to the terminal). Even if the terminal hands off to the no-user cell B, and the cell resource hasn't been released at that moment, probably because the terminal does not report in time, that is, before the time point when the terminal reports, the system has determined that there is no user in the cell, and releases the cell channel resource, then the system can not receive the state information of the terminal, and causes the inconsistency between the channel resource information of the system and that of the terminal, thus the terminal's voice quality becomes worse, or the terminal may even drop off the call.

So far, there is no solution to solve the problem of handoff failure and even drop-call of terminals in the trunking system caused by the reason that the signaling between the terminal and the system can not be totally synchronized when releasing the shared cell channel resource.

WO-A-01/86975, relates to GSM networks, services and functionality provided by such networks, and in particular to a Voice Group Call Service provided in GSM networks, which is a teleservice for Private Mobile Radio applications. Described therein are methods and apparatus for enabling handover in relation to Voice Group Calls, specifically Inter Mobile Switching Centre MSC handover for Voice Group Calls, and handover for Voice calls to and from a dedicated channel.

In US-A-2005/0054375, a method of managing a receiver is described. The method includes the steps of selectively converting a first communications channel to a second communications channel, transmitting data over the second communications channel to a communications unit in which the data includes an information header and reading at least a portion of the information header transmitted over the second communications channel. The method can also include the step of selectively deactivating a receiver of the communications unit in response to the reading step.

### Summary of the Invention

The technical problem to be solved by the present invention is to provide a method for judging cell resource release to avoid the handoff failure and even drop-call of terminals caused by the asynchrony of the signaling between the system and the terminals.

In order to solve the above technical problem, the present invention provides a method for judging cell resource release, comprising:
setting a checking time length at each checking stage for each cell, taking a cell L for example, after a group call in the cell L begins and a channel resource is established, starting a judging process for channel resource release, and each judging process comprising the following steps of:
   (a) starting a pre-release checking stage, a system of the cell L sending a forward checking signal to request terminals to report state information, and if the system does not receive a reverse signal related to the cell L in the checking time length of this checking stage, the system notifying other cells that the cell L prepares to release the channel resource, and proceeding to next step, otherwise, proceeding to a next judging process;
      after receiving the notification, the other cells notifying terminals within areas thereof that if planning to hand off to the cell L, a handoff request should be sent to the system;
   (b) starting a release checking stage, the system sending a forward checking signal to request the terminals to report the state information, and if the system does not receive a reverse signal related to cell L in the checking time length of this checking stage, the system releasing the channel resource of the cell; otherwise, proceeding to a next judging process.

Moreover, the above method may further comprise:
during each judging process, before the pre-release checking stage, first starting a prophase checking stage:
   the system sending a forward checking signal which does not request the terminals to report the state information, and if the system receives a reverse signal related to the cell L in the checking time length of this checking stage, proceeding to a next judging process; otherwise, proceeding to the pre-release checking stage.

Moreover, the above method may further comprise the following feature:
said reverse signal related to the cell L comprises the reverse signal sent by the terminals in the cell L and the handoff request sent by terminals in other cells planning to hand off to the cell L.

Moreover, the above method may further comprise the following feature:
at the pre-release checking stage and the release checking stage, the forward checking signal sent by the system comprises a time length of reporting, and the terminal uses a random algorithm to calculate a time point of reporting according to the time length of reporting and sends the state information at the time point of reporting.

Moreover, the above method may further comprise the following feature:
one checking is performed at the release checking stage, and the time length of reporting carried in the forward checking signal sent by the system is shorter than the time length of this checking.

Moreover, the above method may further comprise the following feature:
at the pre-release checking stage, the release checking stage, or the pre-release checking stage together with the release checking stage, the system performs one checking and sends said forward checking signal for a plurality of times in the checking.

Moreover, the above method may further comprise:
setting a preset period of time between the pre-release checking stage and the release checking stage to guarantee that the forward checking signal at the release checking stage is sent after the handoff to the cell L of the terminal which determines the handoff to the cell L before receiving the pre-release notification.

Moreover, the above method may further comprise the following feature:
said prophase checking stage, pre-release checking stage and release checking stage each performs one checking, and the time length of this checking is just the checking time length of the respective checking stage.

Moreover, the above method may further comprise:
after releasing the channel resource of the cell L in step (b), the system sending a paging message of said group for a preset period of time, and if there is a terminal returning a paging response and the group call in the cell is not released, entering into a delay access process, otherwise, closing the paging message in the cell.

Moreover, the above method may further comprise the following feature:
in step (b), if the system receives a reverse signal related to cell L in the checking time length of the release checking stage, the system notifies the other cells that the cell L recovers the channel resource, and the cell L proceeds to a next judging process.

Moreover, the above method may further comprise the following feature:
the other cells notify terminals in these cells planning to hand off to the cell L that the handoff request should be sent, by sending a message that the cell L has released the channel resource.

To sum up, the method for judging cell channel resource release of the present invention can well eliminate the problem of bad handoff performance caused by the asynchrony of the signaling between the system and terminals, meanwhile, for the problem of the drop-call of terminals due to the cell resource release, a continuous paging is kept for a period of time to guarantee that the terminals can re-access to the system through re-selecting the cell. With the method of the present invention, the handoff performance and call quality of terminals in the group call can be significantly improved and the system capacity can be increased.

### Brief Description of the Drawings

FIG. 1 is a flow chart of cell resource release judging process in accordance with the present invention;
FIG. 2 is a diagram of signaling interaction in cell user checking in accordance with the present invention (there is a user in the cell applying for call rights);
FIG. 3 is a diagram of signaling interaction in cell user checking in accordance with the present invention (there are users in the cell, and they do not actively send reverse signals);
FIG. 4 is a diagram of signaling interaction in cell user checking in accordance with the present invention (there is no user in the cell, and the resource is released);
FIG. 5 is a diagram of signaling interaction in cell user checking in accordance with the present invention (there is no user in the cell, but there is a handoff request from other cells).

### Preferred Embodiments of the Present Invention

The cellular trunking communication system in the present invention applies channel sharing in which all group users in a cell share the channel resource and the system supports soft or hard handoff between the cells. The system judges whether the cell channel resource should be released by checking whether there exists users in the cell in order to increase the system capacity, and moreover, a cell channel resource release judging method is utilized to reduce handoff failure and dropcall.

The embodiment of the present invention will be described in detail with combination of the accompanying drawings.

In this embodiment, a cell channel resource release judging process is divided into three stages: prophase checking stage, pre-release checking stage and release checking stage.

At the prophase checking stage, a forward checking signal sent by the system does not request the terminals to report their state information, and if the system does not receive reverse signals (including the reverse signals sent by the terminals in the cell and the handoff requests sent by terminals in other cells for handing off to the cell) related to the cell in the checking time length of this checking stage, enter into the pre-release checking stage, otherwise, reenter into the prophase checking stage;

At the pre-release checking stage, a forward checking signal sent by the system requests the terminals to report their state information and carries the time length of reporting, and if the system does not receive a reverse signal related to the cell in the checking time length of this checking stage, it notifies other cells that this cell is in the state of preparing to release the channel resource, and enter into the release checking stage, otherwise, reenter into the prophase checking stage;

At the release checking stage, a forward checking signal sent by the system requests the terminals to report their state information and carries the time length of reporting, and if the system does not receive a reverse signal related to the cell in the checking time length of this checking stage, it releases the cell channel resource; otherwise, reenter into the prophase checking stage.

A paging message of this group may still be sent for a certain period after the channel resource is released at the release checking stage.

In order to implement the above processing, the system needs to set for the channel resource of each cell a series of parameters, including the checking time length, the number of checking times, and the time length of paging for sending the paging message after releasing the channel resource, and the sum of all the checking time length is the judging time length in a judging process.

A time length is set for each time of checking, and generally just one time of checking is performed at a checking stage, and the time length of this checking is also the time length of the checking stage belonged to. But there may be multiple times of checking at one checking stage. Moreover, in the time length of a checking, the forward checking signal may be sent for a plurality of times. The time length of each checking may be identical or different. The time length of reporting carried in the forward checking signal should be shorter than or equal to the time length of the checking. Alternatively, the time length of reporting may be notified to the terminals through other messages and saved by the terminals.

After the system releases the cell resource, in a paging time length, as long as the group call does not end, a paging message is kept being sent in the cell to guarantee that the terminal in the cell which drops off the call can re-access to the call, which is a special requirement of the trunking system. The time length of paging is set according to the paging cycle of the system (The terminals periodically wake up in accordance with the cycle to acquire the paging message), for example, the paging cycle is 1.28s, and the time length of paging may be set as N paging cycles, such as 4, to guarantee that the terminals can receive the paging message.

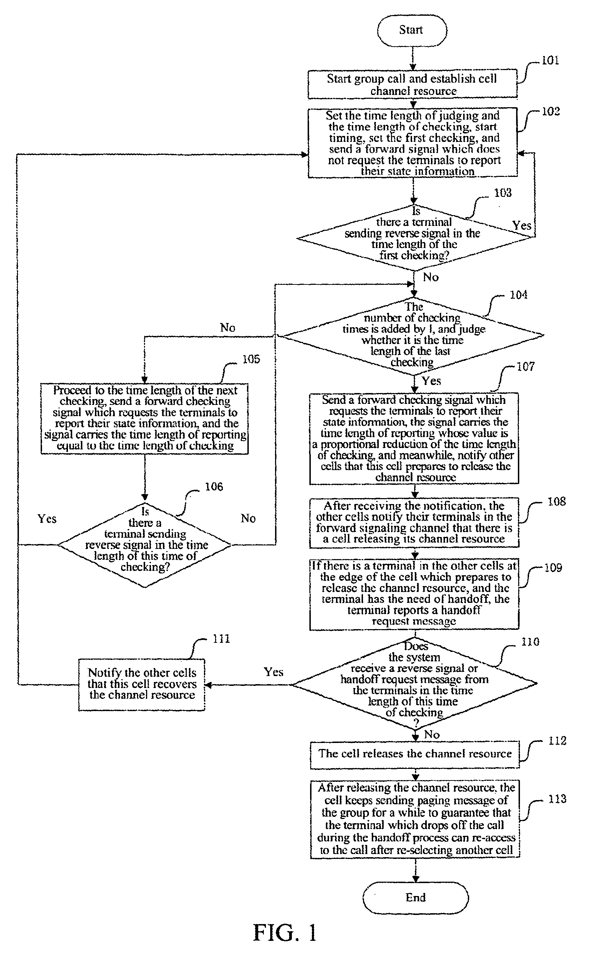

FIG. 1 is a flow chart illustrating an example of the above cell resource release judging method in accordance with the present invention, in which the prophase checking stage comprises only one time of checking, the pre-release checking stage comprises one or more times of checking, and the release checking stage comprises one time of checking. Wherein a cell refers to the transceiver and the processing module related to the cell in the base station subsystem, and the system refers to RNC. The process comprises the following steps:
Step 101: start group call and establish the cell channel resource;
Step 102: the system sets the time length of checking and the number of checking times, starts timing, performs the first checking, and sends to the terminals a forward checking signal which does not require the terminals to report their state information;
Step 103: if there is a terminal reporting a signal related to the cell in the time length of checking, return to step 102, otherwise, proceed to next step;
Step 104: the number of checking times is added by 1, and judge whether it is the time length of the last checking (determined by the number of checking times), if no, proceed to step 105, otherwise, proceed to step 107;
Step 105: send a forward checking signal to request the terminals to report their state information, and the signal carries the time length of reporting which is equal to the time length of checking in this embodiment, and the terminals calculate their time points of reporting based on the time length of reporting, then proceed to the next step;
   The terminals determine their time points of reporting based on the time length of reporting, for example, HASH (or another random algorithm) is performed with the terminal's IMSI (International Mobile Subscriber Identity) and the current time, and the terminals send their state information when the time points of reporting comes, with the purpose of scattering the time points for reporting information by each terminal in the cell and avoiding the impact of reverse signals.
Step 106: judge whether there is a terminal sending reverse signal related to the cell (including the state information) in the time length of this time of checking, if yes, return to step 102, otherwise return to step 104;
Step 107: the cell notifies other cells that this cell prepares to release the channel resource; and sends a forward signal to request the terminals to report their state information (the time length of reporting carried in the message is a proportional reduction of the time length of checking, such as the half, to increase the speed of the terminals reporting their state information in the cell);
   Here, the release checking stage begins at the same time when the pre-release checking stage ends; that is, at the time when the cell notifies other cells that it is at the state of preparing to release the channel resource, the cell sends a forward checking signal to request the terminals to report their state information. While in other embodiments, the release checking stage may begin after a preset period of time, therefore, for those terminals which determine the handoff before receiving the pre-release notification and finish the handoff after the notification, the preset period of time guarantees that the forward checking signal at the release checking stage can be received, especially in the condition that the forward checking signal is sent only once at the release checking stage.
Step 108: after receiving the notification message, the other cells notify their terminals in the forward signaling channel that the cell has released the channel resource, but in fact, the system does not release the resource yet for triggering the terminals at the edge of the cell reporting the handoff request message;
   Here, a cell notifies those terminals which determine to hand off to said cell in the resource pre-release state that they should send handoff request to the system, through sending the information to the terminals in the cell that said cell has released the channel resource, but other methods may be applied, such as defining a new signaling.
Step 109: if there is a terminal in the other cells at the edge of the cell which prepares to release the channel resource and the terminal has a need of handoff, the terminal reports the handoff request message to the system;
Step 110: the system judges in the time length of the last checking whether it receives the handoff request message related to the cell or there is a terminal reporting a signal related to the cell , if yes, proceed to step 111, otherwise, proceed to step 112;
Step 111: the cell notifies other cells that it recovers the channel resource, and return to step 102;
Step 112: the cell releases the channel resource, and proceed to the next step;
Step 113: after the cell releases the channel resource, a group paging message is kept being sent for a time period (set by the system) to guarantee the terminal which drops off the line during the process of handoff can access to the call after re-selecting another cell.

In each time length of checking, the air interface may have bit error, so the forward checking signal may be sent periodically to guarantee that the terminals can receive the forward signal. Especially in the time length of the last checking, the forward checking signal may be sent for a plurality of times (periodically) requesting the terminals to report their state information, and the signal may carry the same time length of reporting, or the time length of reporting may reduce a bit each time to guarantee that the sending time point of the checking signal plus the time length of reporting will not exceed the checking cycle. For a terminal which determines the handoff before receiving the pre-release notification and finishes the handoff after the notification, the terminal may fail to report the state information for the reason that it does not receive the last forward checking signal, thus by sending the forward checking signal for multiple times in the time length of the last checking, the terminal may have the opportunity to receive the checking signal and report its state information, so that the cell resource release after the expiration of the checking time length is avoided .

The present invention will be described in further detail in combination with embodiments in specific application.

In the following embodiments of signaling interaction in cell user checking, suppose the system sets the time length of judging to be T_{judge}, the time length of checking to be T_{check}, the number of checking times to be 3, and the time length of paging to be T_{page}, wherein the T_{judge}/T_{check}=3. The setting of judging time length and checking time length is mainly based on the distribution of the system resources users in the present network, and as for the setting range, the time length of judging may be 15∼45s, and the time length of checking may be 5∼15s.

A group call is established in the system and the group usersare distributed in different cells including cell 1. After the channel resource has been established, the channel resource release judging process starts up in cell 1.

Based on the above configuration, the several conditions that may occur in a judging process will be illustrated through the following embodiments.

### The first embodiment

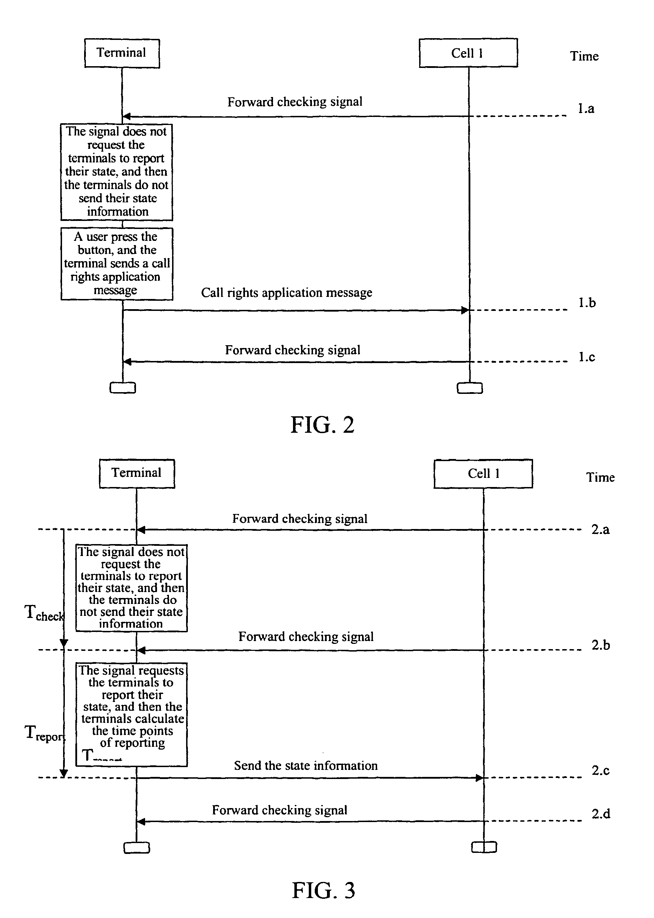

As shown in FIG. 2, at the prophase checking stage, there is a user in the cell who actively sends reverse signals including call rights application, handoff request, and so on. And the call rights application message is taken as an example in Fig. 2, and the main process comprises:
(1.a) cell 1 sends in the forward sharing signaling channel the first forward checking signal (carries the time length of checking) which does not request the terminals to report their state information, at the same time, the system sets the timer related to cell 1, including T_{judge} and T_{check}, and sets the number of checking times to be 1; in cell 1, all user terminals in the group call can receive the forward signal and obtain the cell information, such as the list of adjacent cells; since the terminals are not requested to report their state information, the terminals do not deal with the time length of checking or calculate the time points of reporting;
(1.b) During the defined time length of the first checking, there is a terminal in cell 1 wanting to call, and the user presses the PTT button, then the terminal constructs a call rights application message and sends the message to the system through the reverse sharing signaling channel;
(1.c) During the defined time length of the first checking (that is, timer T_{check} does not expire), the system receives the reverse signal sent actively by the terminal in cell 1 and determines that there exists a group user in the call, then the system resets the timer related to cell 1, including T_{judge} and T_{check}, when timer T_{check} expires, sets the number of checking times as 1, and re-sends the first forward checking signal (carries the time length of checking) in the forward sharing signaling channel which does not request the terminals to report their state.

### The second embodiment

FIG. 3 shows the condition that there is no user in the cell actively sending reverse signal at the prophase checking stage, and there is reverse signaling related to the cell at the pre-release checking stage, and the main process comprises:
(2.a) cell 1 sends in the forward sharing signaling channel the first forward checking signal (carries the time length of checking) which does not request the terminals to report their state information. In cell 1, all user terminals in the group call can receive the forward signal and obtain the cell information, such as the list of adjacent cells. Since the terminals are not requested to report their state information, the terminals do not deal with the time length of checking or calculate the time points of reporting; At the same time, the system sets the timer related to cell 1, including T_{judge} and T_{check}, and sets the number of checking times to be 1.
(2.b) Until the defined time length of the first checking expires, the system does not receive a reverse signal related to cell 1, then the system resets the timer T_{check} related to cell 1, sets the number of checking times to be 2, and sends in the forward sharing signaling channel the second forward checking signal which requests the terminals to report their state, and the message carries the time length of reporting equal to the time length of checking T_{check}. After the terminal in the cell receives the forward checking signal, it calculates its time point of reporting Tᵣₑₚₒᵣₜ by performing HASH with the IMSI (International Mobile Subscriber Identity) and the current time, wherein Tᵣₑₚₒᵣₜ is smaller than T_{check}.
(2.c) During the defined time length of the second checking, each terminal sends its state information at the time point of reporting.
(2.d) During the defined time length of the second checking, after receiving the first piece of state information or other reverse signal, the system immediately resets the timer related to cell 1, including T_{judge} and T_{check} without waiting for the expiration of the timer of the second checking time length, sets the number of checking times to be 1, and sends in the forward sharing signaling channel the first forward checking signal (carries the time length of checking) which does not request the terminals to report their state. After receiving the first forward checking signal, other terminals within the group in cell 1 which do not report their state yet reset Tᵣₑₚₒᵣₜ and stop sending their state information.

As can be seen from this embodiment, sending the forward checking signal at the prophase checking stage can reduce the impact of the reverse signals to the sharing channel.

### The third embodiment

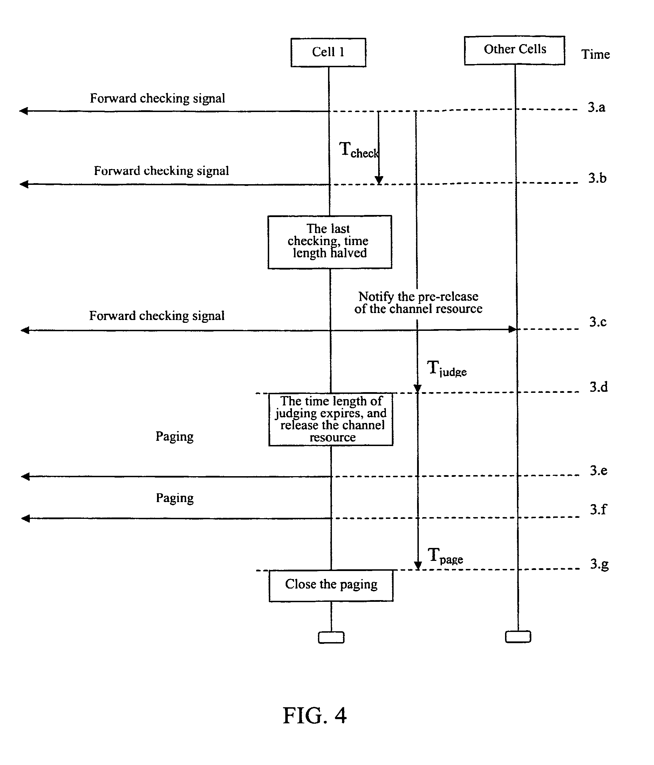

FIG. 4 shows the condition that the reverse signal related to the cell is not received at the prophase checking stage, at the pre-release checking stage or at the release checking stage, and the resource is finally released, and the main process comprises:
(3.a) cell 1 sends in the forward sharing signaling channel the first forward checking signal (carries the time length of checking) which does not request the terminals to report their state information. In cell 1, all user terminals in the group call can receive the forward signal and obtain the cell information, such as the list of adjacent cells. Since the signal does not request the terminals to report their state information, the terminals do not deal with the time length of checking or calculate the time points of reporting; at the same time, the system sets the timer related to cell 1 including T_{judge} and T_{check}, and sets the number of checking times to be 1.
(3.b) Until the defined time length of the first checking expires, the system does not receive a reverse signal related to cell 1, then the system resets the timer T_{check} related to cell 1, sets the number of checking times to be 2, and sends in the forward sharing signaling channel the second forward checking signal which requests the terminals to report their state, and the message carries the time length of reporting which is equal to the time length of checking T_{check}. After receiving the forward checking signal, the terminal in cell 1 obtains its time point of reporting Tᵣₑₚₒᵣₜ by performing HASH with the IMSI (International Mobile Subscriber Identity) and the present time, wherein Tᵣₑₚₒᵣₜ is smaller than T_{check}.
(3.c) Until the defined time length of the second checking expires, the system does not receive a reverse signal related to cell 1, then the system resets the timer T_{check} related to cell 1, sets the number of checking times to be 3, and sends in the forward sharing signaling channel the third forward checking signal which requests the terminals to report their state, and the time length of reporting carried in the message is half of the time length of checking T_{check}, in order to increase the speed of the terminals reporting their state.

Meanwhile, the system sends to other cells a notification message of the pre-release of cell 1's channel resource, and in the adjacent cell information sent by the other cells, the channel resource of cell 1 is set to be null, as such, if there is a terminal in the other cells needing to hand off to cell 1, the terminal will send a handoff request message to the system. The adjacent cell information sent in the other cells and the forward checking signal of the respective cell can be combined into one message to be sent, or they can be sent separately.
(3.d) The defined time length of the third checking expires, that is, the timer of the judging time length expires, and any message, such as the state information and the handoff request sent by the terminal, is not received, thus the system releases the channel resource of cell 1.
(3.e) The system sets the paging time length timer T_{page} and sends a paging message in cell 1. If there is a terminal returning a paging response, enters into the delay access process, which will not be described in the present invention.
(3.f) During the defined paging time length, the paging message is resent according to the cycle of the paging message in cell 1. If there is a terminal returning a paging response, enters into the delay access process, which will not be described in the present invention.
(3.g) The timer T_{page} expires and there is no terminal returning a paging response, so the system closes the paging message in cell 1. Moreover, if the group call is released before the expiration of the timer, the paging message in cell 1 is closed as well.

### The fourth embodiment

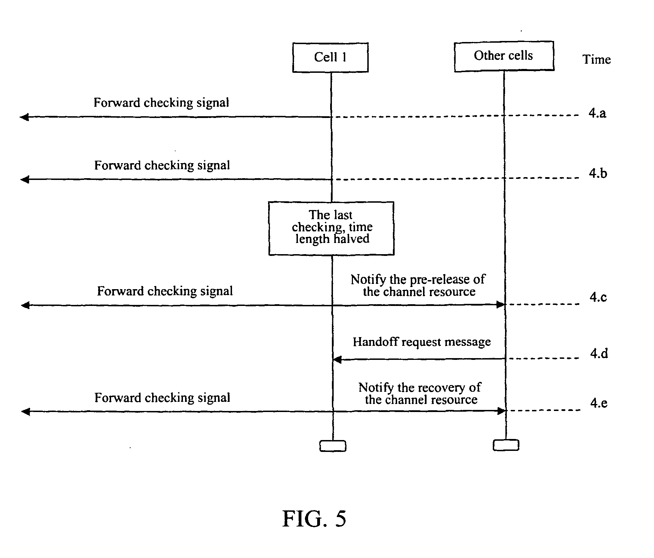

FIG. 5 shows the condition that there is no user in the group call in the cell, but there is a user at the edge of the cell in the state of soft handoff, the system ensures that the cell will not release the resource through the handoff request message from other cells, and the main process comprises:
(4.a) cell 1 sends in the forward sharing signaling channel the first forward checking signaling (carries the time length of checking) which does not request the terminals to report their state information. In cell 1, all user terminals in the group call can receive the forward signal and obtain the cell information, such as the list of adjacent cells. Since the signal does not request the terminals to report their state information, the terminals do not deal with the time length of checking or calculate the time points of reporting;
   At the same time, the system sets the timer related to cell 1 including T_{judge} and T_{check}, and sets the number of checking times to be 1.
(4.b) Until the defined time length of the first checking expires, the system does not receive a reverse signal related to cell 1, then the system resets the timer T_{check} related to cell 1 and sets the number of checking times to be 2, and sends in the forward sharing signaling channel the second forward checking signaling which requests the terminals to report their state, and the message carries the time length of reporting which is equal to the time length of checking T_{check}. After receiving the forward checking signal, the terminal in cell 1 obtains its time point of reporting Tᵣₑₚₒᵣₜ by performing HASH with the IMSI (International Mobile Subscriber Identity) and the present time, wherein Tᵣₑₚₒᵣₜ is smaller than T_{check}.
(4.c) Until the defined time length of the second checking expires, the system does not receive a reverse signal related to cell 1, then the system resets the timer T_{check} related to cell 1, sets the number of checking times to be 3, and sends in the forward sharing signaling channel the third forward checking signal which requests the terminals to report their state (the time length of reporting carried in the message is half of the time length of checking T_{check}, in order to increase the speed of the terminals reporting their state). In this step, after the third forward checking signal is sent, the forward checking signal may further be sent for one or more times, requesting the terminals to report the state information and carrying the time length of reporting. That is, the forward checking signal may be sent for a plurality of times in one checking to guarantee that the terminals handing off to the cell at the release checking stage can report in time.
   Meanwhile, the system sends to other cells a notification message of the pre-release of cell 1's channel resource, and in the adjacent cell information sent in other cells, the channel resource of cell 1 is set to be null (as such, if there is a terminal in the other cells needing to hand off to cell 1, the terminal will send a handoff request message to the system).
(4.d) During the defined time length of the third checking, there is a terminal in the other cells sending a handoff request for the handoff to cell 1.
(4.e) The system receives the handoff request related to cell 1 or a reverse signal from a terminal in the cell, the system resets the timer related to cell 1 including T_{judge} and T_{check}, sets the number of checking times to be 1, and sends in the forward sharing signaling channel the first forward checking signal which does not request the terminals to report their state.

Meanwhile, the system sends to other cells a message of the recovery of cell 1's channel resource, then the adjacent cell information sent in other adjacent cells carries the channel resource of cell 1.

The present invention mainly comprises four aspects, which are described as follows:
1) Different methods are applied in different checking periods to reduce the reverse signaling impact to the cell sharing channel, for example, in the first checking, the terminals are not requested to report their state, and the judging is performed according to the reverse signals (related to the cell) actively sent by the terminals;
2) In a broadcast signaling message, the terminals are notified of the channel resource release in advance (the resource is still retained for a checking period in the system) to avoid the handoff failure and even drop-call of the terminals caused by the asynchrony of the signaling between the system and terminals;
3) In the last checking period, the terminals are required to increase the speed for reporting their state through parameters control to enhance the reliability of checking;
   Here, reporting speed of the terminals is increased by having the time length of reporting smaller than the time length of checking. The success rate may be low if the time length of reporting is equal to that of checking. Due to the time difference between sending and receiving, if the time length of checking by the system is equal to the time length of reporting by the terminals, there is a possibility that a terminal reports at the last time point in the range of the time length of reporting, if so, with the processing time, the checking time length of the system expires. That is, the terminal reports according to the requirement, but the timer of the system expires.
4) After the resource release, a paging message is kept being sent for a period of time to guarantee that the terminals which drop off the line can re-access to the system through re-selecting the cell.

### Industrial Applicability

The method for judging cell channel resource release of the present invention notifies the terminals of the channel resource release in advance in a broadcast signaling message (the message is still retained for a checking period of the system) to avoid the handoff failure and even drop-call of the terminals caused by the asynchrony of the signaling between the system and terminals, thus the problem of bad handoff performance caused by the asynchrony of the signaling between the system and terminals can well be eliminated, meanwhile, for the problem of the drop-call of terminals due to the cell resource release, a continuous paging is kept for a period of time to guarantee that the terminals can re-access to the system through re-selecting the cell. Moreover, in the present invention, different methods are applied in different checking periods to reduce the reverse signaling impact to the cell sharing channel, and in the last checking period, the terminals are required to increase the speed for reporting their state through parameters control so that the reliability of checking is enhanced. With the method of the present invention, the handoff performance and call quality of terminals in the group call can be significantly improved and the system capacity can be increased.

## Claims

1. A method for judging cell resource release, **characterized by** comprising:
setting a checking time length (102) at each checking stage for each cell, taking a cell L for example,
after a group call in the cell L begins and a channel resource is established (101), starting a judging process for channel resource release, and each judging process comprising the following steps of:
(a) starting a pre-release checking stage (107), a system sending a forward checking signal to request terminals to report state information, and if the system does not receive a reverse signal related to the cell L in the checking time length of this checking stage, the system notifying other cells that the cell L prepares to release the channel resource, and proceeding to next step, otherwise, proceeding to a next judging process;
after receiving the notification, the other cells notifying terminals (108) within areas thereof that if planning to hand off to the cell L, a handoff request should be sent to the system;
(b) starting a release checking stage (110), the system sending a forward checking signal to request the terminals to report the state information, and if the system does not receive a reverse signal related to the cell L in the checking time length of this checking stage, the system releasing (112) the channel resource of the cell; otherwise, proceeding to a next judging process.

2. A method of claim 1, further comprising,
during each judging process, before the pre-release checking stage, first starting a prophase checking stage (102).
the system sending a forward checking signal which does not request the terminals to report the state information, and if the system receives a reverse signal related to the cell L in the checking time length of this checking stage, proceeding to a next judging process; otherwise, proceeding to the pre-release checking stage.

3. A method of claim 1, wherein,
said reverse signal related to the cell L comprises the reverse signal sent by the terminals in the cell L and the handoff request sent by terminals in other cells planning to hand off to the cell L.

4. A method of claim 1, wherein,
at the pre-release checking stage (107) and the release checking stage (110), the forward checking signal sent by the system comprises a time length of reporting, and the terminal uses a random algorithm to calculate a time point of reporting according to the time length of reporting and sends the state information at the time point of reporting.

5. A method of claim 4, wherein,
one checking is performed at the release checking stage (110), and the time length of reporting carried in the forward checking signal sent by the system is shorter than the time length of this checking.

6. A method of claim 1, wherein,
at the pre-release checking stage (107), the release checking stage, or the pre-release checking stage together with the release checking stage, the system performs one checking and sends said forward checking signal for a plurality of times in the checking.

7. A method of claim 1, further comprising,
setting a preset period of time between the pre-release checking stage (107) and the release checking stage (110) to guarantee that the forward checking signal at the release checking stage is sent after the handoff to the cell L of the terminal which determines the handoff to the cell L before receiving the pre-release notification.

8. A method of claim 2, wherein,
said prophase checking stage (102), pre-release checking stage (107) and release checking stage (110) each performs one checking, and the time length of this checking is just the checking time length of the respective checking stage.

9. A method of claim 1, further comprising,
after releasing the channel resource of the cell L in step (b), the system sending (113) a paging message of said group for a preset period of time, and if there is a terminal returning a paging response and the group call in the cell is not released, entering into a delay access process, otherwise, closing the paging message in the cell.

10. A method of claim 1, wherein,
in step (b), if the system receives a reverse signal related to the cell L in the checking time length of the release checking stage, the system notifies (110) the other cells that the cell L recovers the channel resource, and the cell L proceeds to a next judging process.

11. A method of claim 1, wherein,
the other cells notify terminals in these cells planning to hand off to the cell L that the handoff request should be sent, by sending a message that the cell L has released the channel resource.

## Patentansprüche

1. Ein Verfahren zum Beurteilen der Freigabe von Zellenbetriebsmitteln, **dadurch gekennzeichnet, dass** es Folgendes beinhaltet:
Festsetzen einer Prüfzeitdauer (102) in jeder Prüfstufe für jede Zelle, zum Beispiel für eine Zelle L,
nachdem ein Gruppenruf in der Zelle L begonnen hat und ein Kanalbetriebsmittel eingerichtet worden ist (101), Starten eines Beurteilungsvorgangs für die Freigabe des Kanalbetriebsmittels, und wobei jeder Beurteilungsvorgang die folgenden Schritte beinhaltet:
(a) Starten einer Vorfreigabe-Prüfstufe (107), Senden eines Vorwärtsprüfsignals durch ein System, um anzufordern, dass Endgeräte Statusinformationen melden, und, wenn das System in der Prüfzeitdauer dieser Prüfstufe kein Rückwärtssignal empfängt, das sich auf die Zelle L bezieht, Benachrichtigen anderer Zellen durch das System, dass die Zelle L vorbereitet, das Kanalbetriebsmittel freizugeben, und Übergehen zum nächsten Schritt, ansonsten Übergehen zu einem nächsten Beurteilungsvorgang;
nach dem Empfangen der Benachrichtigung, Benachrichtigen von Endgeräten (108) durch die anderen Zellen in deren Bereichen, dass, falls eine Umschaltung zur Zelle L geplant wird, eine Umschaltungsanforderung an das System gesendet werden sollte;
(b) Starten einer Freigabe-Prüfstufe (110), Senden eines Vorwärtsprüfsignals durch das System, um anzufordern, dass die Endgeräte die Statusinformationen melden, und, wenn das System in der Prüfzeitdauer dieser Prüfstufe kein Rückwärtssignal empfängt, das sich auf die Zelle L bezieht, Freigeben (112) des Kanalbetriebsmittels der Zelle durch das System; ansonsten Übergehen zu einem nächsten Beurteilungsvorgang.

2. Verfahren gemäß Anspruch 1, das ferner Folgendes beinhaltet:
während jedes Beurteilungsvorgangs, vor der Vorfreigabe-Prüfstufe, zuerst Starten einer Prophasen-Prüfstufe (102),
Senden, durch das System, eines Vorwärtsprüfsignals, das kein Melden der Statusinformationen von den Endgeräten anfordert, und wenn das System in der Prüfzeitdauer dieser Prüfstufe ein Rückwärtssignal empfängt, das sich auf die Zelle L bezieht, Übergehen zu einem nächsten Beurteilungsvorgang; ansonsten Übergehen zu der Vorfreigabe-Prüfstufe.

3. Verfahren gemäß Anspruch 1, wobei
das Rückwärtssignal, das sich auf die Zelle L bezieht, das von den Endgeräten in der Zelle L gesendete Rückwärtssignal und die von Endgeräten in anderen Zellen, die eine Umschaltung zur Zelle L planen, gesendete Umschaltungsanforderung beinhaltet.

4. Verfahren gemäß Anspruch 1, wobei
in der Vorfreigabe-Prüfstufe (107) und der Freigabe-Prüfstufe (110) das von dem System gesendete Vorwärtsprüfsignal eine Meldezeitdauer beinhaltet und das Endgerät einen Zufallsalgorithmus verwendet, um einen Meldezeitpunkt gemäß der Meldezeitdauer zu berechnen, und die Statusinformationen zum Meldezeitpunkt sendet.

5. Verfahren gemäß Anspruch 4, wobei
ein Prüfen in der Freigabe-Prüfstufe (110) durchgeführt wird und die Meldezeitdauer, die in dem von dem System gesendeten Vorwärtsprüfsignal getragen wird, kürzer als die Zeitdauer dieses Prüfens ist.

6. Verfahren gemäß Anspruch 1, wobei
das System in der Vorfreigabe-Prüfstufe (107), der Freigabe-Prüfstufe oder der Vorfreigabe-Prüfstufe zusammen mit der Freigabe-Prüfstufe ein Prüfen durchführt und das Vorwärtsprüfsignal eine Vielzahl von Malen während des Prüfens sendet.

7. Verfahren gemäß Anspruch 1, das ferner Folgendes beinhaltet:
Festsetzen eines vorbestimmten Zeitraums zwischen der Vorfreigabe-Prüfstufe (107) und der Freigabe-Prüfstufe (110), um sicherzustellen, dass das Vorwärtsprüfsignal in der Freigabe-Prüfstufe nach der Umschaltung zur Zelle L des Endgeräts, das die Umschaltung zur Zelle L vor dem Empfangen der Vorfreigabe-Benachrichtigung bestimmt, gesendet wird.

8. Verfahren gemäß Anspruch 2, wobei
die Prophase-Prüfstufe (102), die Vorfreigabe-Prüfstufe (107) und die Freigabe-Prüfstufe (110) jeweils ein Prüfen durchführen und die Zeitdauer dieses Prüfens genau die Prüfzeitdauer der entsprechenden Prüfstufe ist.

9. Verfahren gemäß Anspruch 1, das ferner Folgendes beinhaltet:
nach dem Freigeben des Kanalbetriebsmittels der Zelle L in Schritt (b), Senden (113) einer Funkrufnachricht der Gruppe für einen vorbestimmten Zeitraum durch das System, und wenn es ein Endgerät gibt, das eine Funkrufantwort zurücksendet, und der Gruppenruf in der Zelle nicht freigegeben wird, Eintreten in einen Zugriffverzögerungsvorgang, ansonsten Beenden der Funkrufnachricht in der Zelle.

10. Verfahren gemäß Anspruch 1, wobei
das System in Schritt (b), wenn das System in der Prüfzeitdauer der Freigabe-Prüfstufe ein Rückwärtssignal empfängt, das sich auf die Zelle L bezieht, die anderen Zellen benachrichtigt (110), dass die Zelle L das Kanalbetriebsmittel wiedergewinnt, und die Zelle L zu einem nächsten Beurteilungsvorgang übergeht.

11. Verfahren gemäß Anspruch 1, wobei
die anderen Zellen Endgeräte in diesen Zellen, die die Umschaltung zur Zelle L planen, benachrichtigen, dass die Umschaltungsanforderung gesendet werden sollte, indem eine Nachricht gesendet wird, dass die Zelle L das Kanalbetriebsmittel freigegeben hat.

## Revendications

1. Un procédé pour juger de la libération de ressource de cellule, **caractérisé par** le fait de comprendre :
la définition d'une durée de temps de vérification (102) à chaque stade de vérification pour chaque cellule, en prenant une cellule L par exemple,
après le début d'un appel de groupe dans la cellule L et l'établissement d'une ressource de canal (101), le lancement d'un processus de jugement pour la libération de ressource de canal, et chaque processus de jugement comprenant les étapes suivantes consistant à :
(a) lancer un stade de vérification de pré-libération (107), un système envoyant un signal de vérification vers l'avant pour demander à des terminaux de rapporter des informations d'état, et si le système ne reçoit pas de signal retour apparenté à la cellule L dans la durée de temps de vérification de ce stade de vérification, le système notifiant d'autres cellules que la cellule L s'apprête à libérer la ressource de canal, et passer à l'étape suivante, sinon passer à un processus de jugement suivant ;
après réception de la notification, les autres cellules notifiant à des terminaux (108) au sein de zones de celles-ci que s'ils projettent un transfert vers la cellule L, ils doivent envoyer une demande de transfert au système ;
(b) lancer un stade de vérification de libération (110), le système envoyant un signal de vérification vers l'avant pour demander aux terminaux de rapporter les informations d'état, et si le système ne reçoit pas de signal retour apparenté à la cellule L dans la durée de temps de vérification de ce stade de vérification, le système libérant (112) la ressource de canal de la cellule ; sinon, passer à un processus de jugement suivant.

2. Un procédé de la revendication 1, comprenant en outre,
au cours de chaque processus de jugement, avant le stade de vérification de prélibération, le fait de lancer tout d'abord un stade de vérification de prophase (102),
le système envoyant un signal de vérification vers l'avant qui ne demande pas aux terminaux de rapporter les informations d'état, et si le système reçoit un signal retour apparenté à la cellule L dans la durée de temps de vérification de ce stade de vérification, le fait de passer à un processus de jugement suivant ; sinon, le fait de passer au stade de vérification de pré-libération.

3. Un procédé de la revendication 1, dans lequel,
ledit signal retour apparenté à la cellule L comprend le signal retour envoyé par les terminaux dans la cellule L et la demande de transfert envoyée par des terminaux dans d'autres cellules projetant un transfert vers la cellule L.

4. Un procédé de la revendication 1, dans lequel,
au stade de vérification de pré-libération (107) et au stade de vérification de libération (110), le signal de vérification vers l'avant envoyé par le système comprend une durée de temps de rapport, et le terminal utilise un algorithme aléatoire pour calculer un instant de rapport suivant la durée de temps de rapport et envoie les informations d'état à l'instant de rapport.

5. Un procédé de la revendication 4, dans lequel,
une vérification est réalisée au stade de vérification de libération (110), et la durée de temps de rapport véhiculée dans le signal de vérification vers l'avant envoyé par le système est plus courte que la durée de temps de cette vérification.

6. Un procédé de la revendication 1, dans lequel,
au stade de vérification de pré-libération (107), au stade de vérification de libération, ou au stade de vérification de pré-libération conjointement au stade de vérification de libération, le système réalise une vérification et envoie ledit signal de vérification vers l'avant plusieurs fois pendant la vérification.

7. Un procédé de la revendication 1, comprenant en outre,
la définition d'un laps de temps prédéfini entre le stade de vérification de prélibération (107) et le stade de vérification de libération (110) afin de garantir que le signal de vérification vers l'avant au stade de vérification de libération soit envoyé après le transfert vers la cellule L du terminal qui détermine le transfert vers la cellule L avant la réception de la notification de pré-libération.

8. Un procédé de la revendication 2, dans lequel,
ledit stade de vérification de prophase (102), ledit stade de vérification de pré-libération (107) et ledit stade de vérification de libération (110) réalisent chacun une vérification, et la durée de temps de cette vérification est juste la durée de temps de vérification du stade de vérification respectif.

9. Un procédé de la revendication 1, comprenant en outre
le fait que, après la libération de la ressource de canal de la cellule L à l'étape (b), le système envoie (113) un message de recherche dudit groupe pendant un laps de temps prédéfini, et s'il y a un terminal qui renvoie une réponse de recherche et que l'appel de groupe dans la cellule n'est pas libéré, entre dans un processus d'accès à retardement, sinon, ferme le message de recherche dans la cellule.

10. Un procédé de la revendication 1, dans lequel,
à l'étape (b), si le système reçoit un signal retour apparenté à la cellule L dans la durée de temps de vérification du stade de vérification de libération, le système notifie (110) les autres cellules que la cellule L récupère la ressource de canal, et la cellule L passe à un processus de jugement suivant.

11. Un procédé de la revendication 1, dans lequel,
les autres cellules notifient à des terminaux dans ces cellules projetant un transfert vers la cellule L qu'ils doivent envoyer la demande de transfert, en envoyant un message comme quoi la cellule L a libéré la ressource de canal.
